# EUROPÄISCHE PATENTSCHRIFT

(11) **EP 2 078 650 B1**
(45) Veröffentlichungstag und Bekanntmachung des Hinweises auf die Patenterteilung: **24.04.2019**
(21) Anmeldenummer: 08019165.3
(22) Anmeldetag: 03.11.2008
(51) Int. Cl.: B60T 13/68, B60T 13/74

(54) **Bremsanlage für ein Fahrzeug**
Braking system for a vehicle
Dispositif de freinage pour un véhicule

(30) Priorität: 07.01.2008 DE 102008003380
(43) Veröffentlichungstag der Anmeldung: 15.07.2009
(73) Patentinhaber: WABCO GmbH & Co. OHG, 30432 Hannover (DE)
(72) Erfinder: Beier, Peter, 31515 Wunstorf (DE); Bruns, Gerhard, 30451 Hannover (DE); Förster, Henning, 31171 Nordstemmen (DE); Jantz, Olaf, 30451 Hannover (DE); Rosendahl, Hartmut, 30167 Hannover (DE); Strache, Wolfgang, 30966 Hemmingen (DE)

(56) Entgegenhaltungen:
- EP-A1- 1 078 832
- EP-A1- 1 818 235
- DE-A1-102005 058 799
- GB-A- 2 156 021
- JP-A- 2002 067 909

## Beschreibung

Die Erfindung betrifft eine Bremsanlage nach dem Oberbegriff von Anspruch 1. Derartige bekannte Bremsanlagen sind als Hybrid-Bremsanlagen zur Abbremsung eines Fahrzeugs ausgebildet. Die Zuspannenergien zum Betätigen von Radbremsen des Fahrzeugs werden auf zwei Weisen zur Verfügung gestellt. Radbremsen an wenigstens einer ersten Achse des Fahrzeugs weisen druckmittelbetriebene Bremszylinder auf. Über diese Bremszylinder sind die Radbremsen an dieser ersten Achse des Fahrzeugs betätigbar, so dass die Zuspannenergien in diesem Fall über ein Druckmittel bereitgestellt werden. Die Radbremsen an wenigstens einer zweiten Achse des Fahrzeugs sind dagegen ausschließlich elektromechanisch betätigbar, so dass die Zuspannenergien diesen Radbremsen elektromechanisch bereitgestellt werden.

Herkömmliche elektropneumatische bzw. pneumatische Bremsanlagen stellen die Zuspannenergien zum Betätigen von Radbremsen eines Fahrzeugs in der Regel auf eine einzige Weise zur Verfügung. Die Bremszylinder zum Betätigen der Radbremsen sind alle elektropneumatisch oder pneumatisch betätigbar. Mittels einer Bremspedaleinrichtung ist ein pneumatischer Druck aussteuerbar und ggf. ein Bremsanforderungssignal erzeugbar. Nach dem ggf. vorhandenen Bremsanforderungssignal ist mittels einer Ventileinheit ebenfalls ein Druck aussteuerbar. Ein ausgesteuerter Druck ist mittels Relaisventilen verstärkbar und den druckluftbetriebenen Bremszylindern zum Betätigen der Radbremsen bereitstellbar. Hierzu weisen herkömmliche elektropneumatische oder pneumatische Bremsanlagen in der Regel zwei druckluftbetriebene Bremskreise auf, die jeweils von einem Druckluftvorratsbehälter mit Druckluft versorgbar sind. Die Druckluftvorratsbehälter sind über Druckluftleitungen mit der Ventileinheit und den druckluftbetriebenen Bremszylindern verbunden.

Eine Feststellbremse ist bei diesen bekannten Betriebsbremssystemen regelmäßig an wenigstens einer Hinterachse des Fahrzeugs einlegbar. Hierzu weisen die Bremszylinder an Radbremsen dieser Hinterachse Federspeicher auf. Im unbelüfteten Zustand der Federspeicherbremszylinder ist die Feststellbremse mittels der Federspeicher eingelegt. Für den Fahrbetrieb muss die Feststellbremse gelöst werden. Hierzu ist der Federspeicherteil der Federspeicherbremszylinder mit Druckluft beaufschlagbar, indem eine Verbindung mit einem der Druckluftvorratsbehälter des Fahrzeugs hergestellt wird.

Diese bekannten elektropneumatischen oder pneumatischen Bremsanlagen haben den Nachteil, dass sie druckluftbetriebene Bremszylinder an allen Radbremsen eines Fahrzeugs aufweisen. Diese druckluftbetriebenen Bremszylinder sind über zwei Druckluftkreise mit Druckluft versorgbar. Für derartige Betriebsbremssysteme sind daher viele teure Komponenten zu verbauen. Zudem ist der Aufwand für die Verrohrung groß. Dies führt zu hohen Kosten beim Einbau und zu einer Fehleranfälligkeit wegen möglicher Lecks in den Druckluftleitungen. Ein daraus resultierender Wartungsaufwand und Ausfallzeiten führen ebenfalls zu hohen Kosten.

Hybridsysteme sind kostengünstiger als herkömmliche hydraulische oder pneumatische Bremsanlagen. Hybridsysteme weisen nämlich an wenigstens einer Achse des Fahrzeugs vergleichsweise kostengünstige elektromechanische Bremsbetätigungseinrichtungen unter Verzicht auf vergleichsweise teurere druckmittelbetriebene Bremszylinder auf. Eine derartige als Hybridsystem ausgebildete Bremsanlage ist aus JP 2002-067909 bekannt. Die Bremsanlage von JP 2002-067909 weist hydraulisch betätigbare Bremszylinder an einer ersten Gruppe von Rädern und elektromechanische Bremsbetätigungseinrichtungen an einer zweiten Gruppe von Rädern auf. Dabei sind die Räder der ersten Gruppe regelmäßig Räder einer Vorderachse, während die Räder der zweiten Gruppe regelmäßig Räder einer Hinterachse sind.

Für Radbremsen an linken Vorderrädern und für Radbremsen an rechten Vorderrädern werden zwei voneinander unabhängige Druckkreise verwendet. Der mittels einer Pedaleinrichtung aussteuerbare hydraulische Druck ist mittels Ventileinheiten verstärkbar und hydraulisch betriebenen Bremszylindern bereitstellbar.

Der in den hydraulischen Bremskreisen ausgesteuerte Druck wird gemessen. Zudem werden mittels Sensoren Raddrehgeschwindigkeiten sowie Drehmomente von Motoren von elektromechanischen Bremsbetätigungseinrichtungen erfasst. Unter Verwendung der Sensordaten werden die elektromechanischen Bremsbetätigungseinrichtungen gesteuert. Zur Steuerung der elektromechanischen Bremsbetätigungseinrichtung für das linke Hinterrad dient dabei der Messwert des ausgesteuerten hydraulischen Drucks des rechten Vorderrads. Der ausgesteuerte hydraulische Druck für die hydraulisch betätigbare Radbremse des linken Vorderrads dient dabei gleichzeitig zur Steuerung der elektromechanischen Bremsbetätigungseinrichtung für das rechte Hinterrad. Diese kreuzweise Verknüpfung von Vorderradbremsen und Hinterradbremsen vermeidet den Ausfall aller Radbremsen auf einer Fahrzeugseite bei Ausfall eines Bremskreises.

Die elektromechanisch betätigbaren Radbremsen werden gemäß JP 2002-067909 nicht betätigt, wenn das Fahrzeug eine sehr geringe Geschwindigkeit aufweist, wenn das Fahrzeug steht oder wenn eine Feststellfunktion des Fahrzeugs aktiviert ist. Hierdurch wird elektrische Energie gespart.

Auch EP 1 352 799 A2, US 5,390,992, DE 196 22 017 A1 und EP 1 785 324 A1 zeigen hybride Bremsanlagen, welche hydraulisch betätigbare Bremszylinder zur Abbremsung von Rädern an wenigstens einer Achse eines Fahrzeugs sowie elektromechanische Bremsbetätigungseinrichtungen an wenigstens einer zweiten Achse des Fahrzeugs aufweisen.

Diese bekannten als Hybridsysteme ausgebildeten Bremsanlagen weisen alle eine Kombination von hydraulisch betätigbaren Bremszylindern an wenigstens einer ersten Achse und elektromechanisch betätigbaren Bremsbetätigungseinrichtungen an wenigstens einer zweiten Achse eines Fahrzeugs auf.

EP 1 078 832 A1 zeigt eine Bremsvorrichtung, bei der sowohl eine Druckmittelbremseinrichtung, deren Betätigungsenergie einem Druckmittelspeicher entnommen wird, als auch eine elektrische Bremseinrichtung, deren Betätigungsenergie einem elektrischen Energiespeicher entnommen wird, vorgesehen ist.

JP 2002-067909 schlägt ferner vor, das zuvor genannte als Hybridsystem ausgebildete Bremsanlage auch für einen Fahrzeugzug, bestehend aus einem Zugfahrzeug und einem Anhängefahrzeug, zu verwenden. Dies ist weitgehend unproblematisch, wenn das Anhängefahrzeug über elektromechanisch betätigbare Bremsbetätigungseinrichtungen verfügt. Viele Anhängefahrzeuge weisen jedoch druckmittelbetriebene Bremszylinder auf. Ein Zugfahrzeug sollte deshalb in der Lage sein, auch mit einem Anhängefahrzeug, welches druckmittelbetriebene Bremszylinder aufweist, einen Fahrzeugzug zu bilden und diesen sicher abbremsen zu können. Eine Beschränkung auf die Verwendung von Anhängefahrzeugen mit ausschließlich elektromechanisch betätigbaren Bremsbetätigungseinrichtungen ist in der Regel nicht gewünscht. Ein Zugfahrzeug soll nämlich in der Regel verschiedene Anhänger ankoppeln und mit diesen einen Fahrzeugzug bilden können.

Die Verwendung eines hydraulischen Bremskreises mit einem Anhänger hat jedoch den Nachteil, dass Hydraulikflüssigkeit beim Ankoppeln oder beim Abkoppeln des Anhängers entweichen kann. Hydraulikflüssigkeit belastet die Umwelt und sollte daher aufgefangen und fachgerecht entsorgt werden. Außerdem muss ein Verlust von Hydraulikflüssigkeit ausgeglichen, d.h. Hydraulikflüssigkeit nachgefüllt werden. Zum einen ist bereits die Hydraulikflüssigkeit selbst teuer. Zum anderen ist aber auch der damit verbundene Wartungsaufwand kostspielig.

Die bekannten als Hybridsystem ausgebildeten Betriebsbremssysteme sind zwar kostengünstiger als konventionelle rein druckmittelbetriebene Betriebsbremssysteme. Sie haben jedoch den Nachteil, dass sie wenig geeignet sind für die Verwendung in einem Fahrzeug, an das flexibel ein Anhänger ankoppelbar sein soll.

Der Erfindung liegt daher das Problem zugrunde, ein Betriebsbremssystem zur Abbremsung eines Fahrzeugs bereitzustellen, das kostengünstiger ist als bekannte Betriebsbremssysteme und das insbesondere in einem Zugfahrzeug einsetzbar ist, an das flexibel ein Anhängefahrzeug mit vom Zugfahrzeug betätigbaren druckmittelbetriebenen Bremszylindern ankoppelbar ist.

Dieses Problem wird durch eine Bremsanlage gemäß Patentanspruch 1 gelöst.

Als Druckmittel verwendet die erfindungsgemäße Bremsanlage Luft. Die druckmittelbetriebenen Bremszylinder sind druckluftbetriebene Bremszylinder. Diese druckluftbetriebenen Bremszylinder sind pneumatisch mittels Druckluft betätigbar und werden im Folgenden deshalb auch pneumatisch betätigbare Bremszylinder genannt, unabhängig davon, ob der pneumatische Druck pneumatisch oder elektropneumatisch ausgesteuert wird.

Von der erfindungsgemäßen Bremsanlage ist Druckluft für einen Anhänger mit pneumatisch betätigbaren Bremszylindern bereitstellbar, da ein pneumatisches System und damit Druckluft bereits vorhanden ist. Die erfindungsgemäße Bremsanlage ist daher flexibel für verschiedene Nutzfahrzeuge einsetzbar. Insbesondere ist sie geeignet für den Einsatz in Zugfahrzeugen, an die ein Anhänger ankoppelbar ist. Sie ist jedoch auch einsetzbar in Fahrzeugen, an welche kein Anhänger ankoppelbar ist. Bspw. ist sie auch in Bussen, an die kein Anhänger ankoppelbar ist, einsetzbar. Es ist nämlich vorteilhaft, gleiche Komponenten für verschiedene Nutzfahrzeuge zu verwenden, unabhängig davon ob an diese ein Anhänger ankoppelbar ist oder ob auf die Möglichkeit einer Ankopplung eines Anhängers verzichtet wird. Dann können nämlich größere Stückzahlen produziert werden, wodurch sich die Herstellungskosten einzelner Komponenten und damit die Kosten der Bremsanlage insgesamt verringern.

Durch die Verwendung einer als Hybridsystem ausgebildeten Bremsanlage kann auf druckluftbetriebene Bremszylinder an wenigstens einer Achse des Fahrzeugs verzichtet werden. An wenigstens einer Achse des Fahrzeugs sind Radbremsen nämlich ausschließlich elektromechanisch betätigbar. Elektromechanische Bremsbetätigungseinrichtungen sind kostengünstiger als druckluftbetriebene Bremszylinder. Die erfindungsgemäße Bremsanlage reduziert die Anzahl verbauter teurer Komponenten und spart Kosten.

Die erfindungsgemäße Bremsanlage weist zudem eine hohe Betriebssicherheit auf. Fällt nämlich entweder die pneumatische Betätigungsart oder die elektromechanische Betätigungsart von Radbremsen aus, so kann ein Fahrzeug über die jeweils andere Betätigungsart noch abgebremst und zum Stillstand gebracht werden.

Insgesamt stellt die erfindungsgemäße Bremsanlage somit eine kostengünstige und insbesondere im Nutzfahrzeugbereich flexibel einsetzbare Bremsanlage bereit.

Erfindungsgemäß weisen die Radbremsen an der wenigstens einen ersten Achse des Fahrzeugs zwei Betätigungsarten auf. In einer ersten Betätigungsart sind die Radbremsen an der wenigstens einen ersten Achse des Fahrzeugs mittels der druckluftbetriebenen Bremszylinder betätigbar. In einer zweiten Betätigungsart sind die Radbremsen an dieser ersten Achse des Fahrzeugs elektromechanisch betätigbar. Die Radbremsen sind nun mittels beider Betätigungsarten zusammen oder mittels einer dieser Betätigungsarten alleine betätigbar. Die Radbremsen sind somit flexibel steuerbar. Insbesondere ergibt sich hieraus der Vorteil, dass bei Ausfall einer Betätigungsart die Radbremsen noch durch die jeweils andere Betätigungsart betätigt werden können. Hieraus ergibt sich ein weiterer Sicherheitsgewinn beim Abbremsen des Fahrzeugs.

Vorteilhafterweise verfügt die wenigstens eine erste Achse des Fahrzeugs über eine Feststellbremsfunktion, insbesondere dann, wenn diese wenigstens eine erste Achse des Fahrzeugs eine Hinterachse ist. Zusammen mit einer ggf. vorhandenen Feststellbremsfunktion der wenigstens einen zweiten Achse erhöht sich die Sicherheit beim Abstellen des Fahrzeugs. Ein Wegrollen des Fahrzeugs wird nämlich dann von Radbremsen an mehreren Achsen des Fahrzeugs wirksam verhindert. Das Fahrzeug kann somit an steileren Wegstrecken abgestellt werden, ohne dass es wegrollt.

Radbremsen an der wenigstens einen ersten Achse des Fahrzeugs verfügen vorzugsweise über eine elektromechanisch betätigbare Feststellbremsfunktion. Eine pneumatisch betätigbare Feststellbremsfunktion kann somit entfallen. Dies verringert die Kosten. Wenn die Radbremsen an der wenigstens einen zweiten Achse des Fahrzeugs zudem über eine elektromechanisch betätigbare Feststellbremsfunktion verfügen, ist ein Fahrzeug, auch ohne eine pneumatisch betätigbare Feststellbremsfunktion, an mehreren Achsen feststellbar. Hierdurch ergibt sich eine hohe Sicherheit beim Abstellen des Fahrzeugs bei gleichzeitig geringen Kosten.

Die wenigstens eine erste Achse des Fahrzeugs kann über eine pneumatisch betätigbare Feststellbremsfunktion verfügen. Über diese Feststellbremsfunktion ist das Fahrzeug im abgestellten Zustand alleine oder unterstützend feststellbar. Vorzugsweise ist die wenigstens eine erste Achse des Fahrzeugs dann eine Hinterachse. Die Radbremsen an der wenigstens einen zweiten Achse des Fahrzeugs können zusätzlich über eine Feststellbremsfunktion verfügen. In jedem Fall gibt der Einsatz einer pneumatisch betätigbaren Feststellbremsfunktion die Sicherheit eines bewährten Systems beim Abstellen des Fahrzeugs, die ggf. durch den Einsatz einer elektromechanisch betätigbaren Feststellbremsfunktion noch erhöht wird.

Vorzugsweise verfügen die Radbremsen an der wenigstens einen zweiten Achse des Fahrzeugs über eine elektromechanisch betätigbare Feststellbremsfunktion. Hierdurch entfällt die Notwendigkeit, eine pneumatisch betätigbare Feststellbremsfunktion an der wenigstens einen ersten Achse des Fahrzeugs vorzusehen. Dort können folglich reguläre druckluftbetriebene Bremszylinder verbaut werden. Kombinierte Federspeicherbremszylinder werden dann nicht benötigt. Die Kosten der Bremsanlage können somit weiter gesenkt werden. Die wenigstens eine zweite Achse des Fahrzeugs wird dabei vorzugsweise eine Hinterachse sein. Sie kann jedoch auch eine Vorderachse sein.

In zwei bevorzugten Ausführungsformen der erfindungsgemäßen Bremsanlage weist die Bremspedaleinrichtung einen Bremswertgeber auf. In Erwiderung auf eine Betätigung des Bremspedals ist ein Bremsanforderungssignal unmittelbar vom Bremswertgeber generierbar. Die elektromechanisch betätigbaren Radbremsen werden nun mittelbar, nämlich in Erwiderung auf das Bremsanforderungssignal, betätigt. Der pneumatische Druck zur Betätigung der pneumatisch betätigbaren Radbremsen wird elektropneumatisch, d.h. mittelbar, von einer Ventileinheit in Erwiderung auf das Bremsanforderungssignal ausgesteuert. Zusätzlich ist der Druck in direkter Erwiderung auf eine Betätigung des Bremspedals, d.h. unmittelbar, pneumatisch aussteuerbar. Ein entsprechend ausgebildeter pneumatische Redundanzkreis ermöglicht es, ein Fahrzeug mit der erfindungsgemäßen Bremsanlage auch bei einem Ausfall der Fahrzeugelektronik mittels der pneumatisch betätigbaren Bremszylinder abzubremsen.

In einer hiervon abweichenden Ausführungsform wird auf die unmittelbare pneumatische Aussteuerung des Drucks verzichtet. Es ist deshalb keine Verrohrung mit Druckmittelleitungen im Führerhaus eines die erfindungsgemäße Bremsanlage aufweisenden Fahrzeugs mehr nötig. Hierdurch verringert sich die Zahl der Druckluftleitungen. Die Gefahr eines Druckverlustes wegen undichter Druckluftleitungen verringert sich. Die Kosten der Bremsanlage werden gesenkt.

In einer alternativen Ausführungsform wird wieder ein Bremsanforderungssignal mittels eines Bremswertgebers in Erwiderung auf eine Betätigung des Bremspedals generiert. Gleichzeitig wird im Unterschied zu der vorgenannten Ausführungsform jedoch gleichzeitig direkt pneumatisch ein pneumatischer Druck ausgesteuert. Der pneumatische Druck zum Betätigen der pneumatisch betätigbaren Radbremsen wird folglich nicht elektropneumatisch in Erwiderung auf die Betätigung des Bremspedals ausgesteuert. Hierdurch ist ein Achsmodulator verzichtbar, welcher ansonsten das elektropneumatische Aussteuern des pneumatischen Drucks übernimmt. Dies spart Kosten und gewährleistet gleichzeitig, dass die pneumatisch betätigbaren Radbremsen auch bei einem Ausfall der Fahrzeugelektronik noch betätigt werden können. In dieser Ausführungsform ist die erfindungsgemäße Bremsanlage folglich vorteilhaft in Fahrzeugen einsetzbar, welche ohne die Möglichkeit, elektronisch pneumatische Drücke auszusteuern, auskommen und gleichzeitig immer, d.h. auch bei einem Ausfall der Fahrzeugelektronik, sicher abbremsbar sein sollen.

In einer weiteren alternativen Ausführungsform der Bremsanlage wird auf den Bremswertgeber der Bremspedaleinrichtung verzichtet. Ein Bremsanforderungssignal ist folglich nicht unmittelbar in Erwiderung auf eine Betätigung des Bremspedals erzeugbar. Unmittelbar auf eine Betätigung des Bremspedals wird in dieser Ausführungsform der Bremsanlage ein pneumatischer Druck ausgesteuert. Mittels dieses ausgesteuerten pneumatischen Drucks können die pneumatisch betätigbaren Bremszylinder betätigt werden. Das Bremsanforderungssignal wird in dieser Ausführungsform der Erfindung mittelbar erzeugt. Die Druckluftleitungen, welche den pneumatisch betätigbaren Bremszylindern Druckluft bereitstellen, weisen nämlich nun Drucksensoren auf. Diese Drucksensoren messen den pneumatisch ausgesteuerten pneumatischen Druck in diesen Druckluftleitungen. Aus einem Messwert eines Drucksensors ist ein Bremsanforderungssignal generierbar. In Erwiderung auf ein derart generiertes Bremsanforderungssignal werden die elektromechanisch betätigbaren Radbremsen betätigt.

In einer Variante generiert ein einziger Drucksensor ein einziges Bremsanforderungssignal. In einer anderen Variante wird ein Bremsanforderungssignal aus den Messwerten mehrerer Drucksensoren generiert. In einer weiteren Variante generieren mehrere Drucksensoren jeweils ein Bremsanforderungssignal. Alle elektromechanisch betätigbaren Radbremsen können nun in Erwiderung auf ein einziges Bremsanforderungssignal betätigt werden. In einer hiervon abweichenden Variante ist wenigstens eine elektromechanisch betätigbare Radbremse in Erwiderung auf ein erstes Bremsanforderungssignal betätigbar und wenigstens eine zweite elektromechanisch betätigbare Bremse in Erwiderung auf ein zweites Bremsanforderungssignal betätigbar. Mehrere elektromechanisch betätigbare Radbremsen werden in Erwiderung auf von unterschiedlichen Drucksensoren generierten Bremsanforderungssignalen betätigt.

In einer Ausführungsform der erfindungsgemäßen Bremsanlage sind sowohl die Radbremsen an der wenigstens einen ersten Achse als auch die Radbremsen an der wenigstens einen zweiten Achse von einem gemeinsamen Modul steuerbar. Dieses Modul kann in die Bremspedaleinrichtung integriert sein. Es kann jedoch auch separat verbaut sein. Durch die zusammengefasste Bauweise im Vergleich zu einer Steuerbarkeit der Radbremsen von mehreren Modulen kann auf Signalleitungen zwischen diesen Modulen verzichtet werden. Zudem ergibt sich eine Kosteneinsparung sowohl bei der Fertigung der Komponenten als auch beim Einbau aufgrund eines geringeren Arbeitsaufwands.

In einer hiervon abweichenden Ausführungsform der Bremsanlage sind die Radbremsen an wenigstens einer ersten Achse des Fahrzeugs, welche pneumatisch betätigbare Bremszylinder aufweist, von einem ersten Modul steuerbar. Die ausschließlich elektromechanisch betätigbaren Radbremsen an wenigstens einer zweiten Achse des Fahrzeugs sind dagegen von einem zweiten Modul steuerbar. Die Steuerung der Radbremsen ist somit auf zwei Module verteilt. Dadurch erhöht sich die Betriebssicherheit weiter. Bei Ausfall der Elektronik an einem Modul bleiben die vom jeweils anderen Modul gesteuerten Radbremsen nämlich weiterhin steuerbar. Es können folglich nicht alle Radbremsen gleichzeitig ausfallen. Bei Ausfall eines Moduls kann ein Fahrzeug mit der erfindungsgemäßen Bremsanlage kontrolliert abgebremst und zum Stillstand gebracht werden.

In einer vorteilhaften Weiterbildung der Bremsanlage sind die zwei vorhandenen Module zudem von zwei Batterien mit elektrischer Energie versorgt. Ein möglicher Grund für einen Ausfall der Elektronik eines Moduls ist nämlich ein Ausfall der Energieversorgung. Dadurch, dass jedes der zwei Module von jeweils einer Batterie mit elektrischer Energie versorgt wird, verringert sich die Wahrscheinlichkeit weiter, dass beide Module gleichzeitig ausfallen. Ein gleichzeitiger Ausfall der elektronischen Steuerung aller Radbremsen wird somit sehr unwahrscheinlich.

Vorzugsweise ist das erste Modul, welches die Radbremsen an der wenigstens einen ersten Achse des Fahrzeugs mit druckluftbetriebenen Bremszylindern steuert, baulich in die Bremspedaleinrichtung integriert. Die zusammengefasste Bauweise führt zu einer Kostensenkung. Es entfallen nämlich Verbindungsleitungen und Verbindungsrohre zwischen der Bremspedaleinrichtung und dem ersten Modul. Zudem verringert sich durch die zusammengefasste Bauweise der Montageaufwand. Infolge dessen sinken auch die Kosten bei der Montage.

Vorzugsweise verfügen elektromechanisch betätigbare Radbremsen über eine elektromechanische ABS(Antiblockiersystem)-Funktion, d.h. eine Antiblockierfunktion, mittels der eine Radbremse eines blockierenden Rades automatisch lösbar ist. Die bekannte Sicherheit eines Antiblockiersystems, welche sich aus der besseren Beherrschbarkeit des Fahrzeugs bei einer Vollbremsung ergibt, wird somit auch von elektromechanisch betätigbaren Radbremsen hergestellt. Hierfür weist die Bremsanlage wenigstens einen Raddrehzahlsensor auf, mittels dessen das Blockieren eines blockierenden Rades feststellbar ist. Im Unterschied zu konventionellen Bremssystemen ist für das Bereitstellen der ABS-Funktion an elektromechanisch betätigbaren Radbremsen jedoch kein zusätzliches ABS-Ventil nötig. Es entfallen somit weitere Komponenten. Die Kosten des Systems können ohne Einschränkungen bei der Sicherheit gesenkt werden.

Vorzugsweise ist die ABS-Funktion einer Radbremse vom jeweils selben Modul steuerbar wie die jeweilige Radbremse. Falls es zu einem Ausfall von Elektronik kommt, fallen bevorzugt die in einem Modul zusammengefassten Funktionen gleichzeitig aus. Für eine ausgefallene Bremsfunktion ist jedoch auch keine ABS-Funktion mehr nötig. Die zusammengefasste Bauweise vermeidet somit unnötigen Datenaustausch zwischen verschiedenen Modulen, ohne dass dabei die Wahrscheinlichkeit einer Fehlfunktion des ABS erhöht wird. Durch die Implementierung der ABS-Funktion der wenigstens einen ersten Achse des Fahrzeugs im ersten Modul und der wenigstens einen zweiten Achse des Fahrzeugs im zweiten Modul verringert sich sogar das Risiko, dass eine ABS-Funktion vollständig ausfallen könnte.

In einer besonders bevorzugten Ausführungsform der erfindungsgemäßen Bremsanlage ist wenigstens eine erste Achse des Fahrzeugs eine Vorderachse des Fahrzeugs und wenigstens eine zweite Achse des Fahrzeugs eine Hinterachse des Fahrzeugs.

In einer vorteilhaften Weiterbildung der vorgenannten Ausführungsform der erfindungsgemäßen Bremsanlage ist wenigstens eine ggf. vorhandene weitere erste Achse des Fahrzeugs eine Hinterachse des Fahrzeugs und wenigstens eine ggf. vorhandene weitere zweite Achse des Fahrzeugs eine Vorderachse des Fahrzeugs. Für Radbremsen an ggf. vorhandenen weiteren Vorderachsen des Fahrzeugs kann nämlich auf pneumatisch betätigbare Bremszylinder verzichtet werden. Der Einsatz von vergleichsweise günstigen elektromechanisch betätigbaren Radbremsen reicht hier aus. Aus dem zusätzlichen Einsatz pneumatisch betätigbarer Bremszylinder an wenigstens einer Hinterachse des Fahrzeugs ergibt sich der Vorteil, dass ein Fahrzeug mit der erfindungsgemäßen Bremsanlage sowohl an wenigstens einer Vorderachse als auch an wenigstens einer Hinterachse des Fahrzeugs mittels pneumatisch betätigbarer Bremszylinder abbremsbar ist. Insbesondere dann, wenn die Bremsanlage einen pneumatischen Redundanzkreis aufweist, ist das Fahrzeug dann sowohl mittels Radbremsen an wenigstens einer Vorderachse als auch mittels Radbremsen an wenigstens einer Hinterachse des Fahrzeugs abbremsbar. Zudem können pneumatisch betätigbare Bremszylinder an der wenigstens einen Hinterachse als kombinierte Federspeicherbremszylinder ausgebildet sein. Dann ist auch eine Feststellbremsfunktion mittels der wenigstens einen weiteren ersten Achse herstellbar.

In einer anderen Ausführungsform der Bremsanlage ist wenigstens eine erste Achse des Fahrzeugs eine Hinterachse des Fahrzeugs und wenigstens eine zweite Achse des Fahrzeugs eine Vorderachse des Fahrzeugs. Diese Ausführungsform hat den Vorteil, dass ein die erfindungsgemäße Bremsanlage aufweisendes Fahrzeug dann pneumatisch an Radbremsen wenigstens einer Hinterachse feststellbar ist, wenn die pneumatisch betätigbaren Bremszylinder an der wenigstens einen Hinterachse als kombinierte Federspeicherbremszylinder ausgebildet sind.

In Weiterbildung des vorgenannten Ausführungsbeispiels ist wenigstens eine ggf. vorhandene weitere erste Achse des Fahrzeugs eine Vorderachse des Fahrzeugs und wenigstens eine ggf. vorhandene weitere zweite Achse des Fahrzeugs eine Hinterachse des Fahrzeugs. Mittels der Radbremsen an der wenigstens einen weiteren ersten Achse des Fahrzeugs ist dieses Fahrzeug folglich mit der hohen Bremskraft, welche von pneumatisch betätigbaren Bremszylinder bereitstellbar ist, abbremsbar. Weitere zweite Achsen des Fahrzeugs, welche ausschließlich elektromechanisch betätigbare Radbremsen aufweisen, können weitere Hinterachsen sein, um die Kosten der Bremsanlage gering zu halten.

In einer Ausführungsform der Erfindung ist die Bremsanlage in einem Fahrzeugzug, bestehend aus einem Zugfahrzeug und einem Anhängefahrzeug, einsetzbar. Das die erfindungsgemäße Bremsanlage aufweisende Fahrzeug ist dann das Zugfahrzeug. Die Bremsanlage des Fahrzeugs stellt dem Anhängefahrzeug über zwei Druckluftanschlüsse dann einen Vorratsluftdruck und einen ausgesteuerten pneumatischen Druck zum Betätigen der Radbremsen des Anhängefahrzeugs bereit. Radbremsen eines Anhängefahrzeugs weisen nämlich in der Regel pneumatisch betätigbare Bremszylinder auf. Die zur Betätigung dieser Bremszylinder notwendige Druckluft ist leicht von der erfindungsgemäßen Bremsanlage bereitstellbar, da diese Bremsanlage ohnehin Druckluft als Druckmittel verwendet.

In einer Ausführungsform der Bremsanlage ist diese Bremsanlage ebenfalls als Bremsanlage für einen Fahrzeugzug ausgebildet. Zusätzlich oder alternativ zur vorgenannten Ausführungsform weist die Bremsanlage jedoch nun einen Steckanschluss auf, über den dem Anhängefahrzeug ein elektrisches Signal zum Betätigen elektromechanisch betätigbarer Radbremsen des Anhängefahrzeugs bereitstellbar ist. An ein die erfindungsgemäße Bremsanlage in dieser Ausführungsform aufweisendes Fahrzeug kann folglich ein Anhängefahrzeug angekoppelt werden, welches kostengünstige elektromechanisch betätigbare Radbremsen aufweist. Diese Radbremsen können mittels des elektrischen Signals betätigt werden.

Weitere vorteilhafte Ausführungsformen ergeben sich aus den Unteransprüchen sowie aus den anhand der beigefügten Zeichnung näher erläuterten Ausführungsbeispielen. In der Zeichnung zeigt:

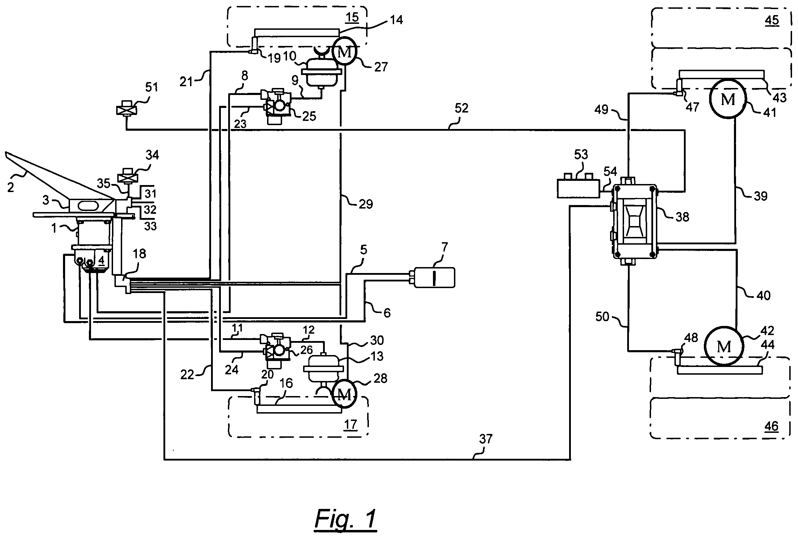

- Fig. 1: eine als Hybridsystem ausgebildete Bremsanlage zur Abbremsung eines Fahrzeugs in vereinfachter schematischer Darstellung mit elektropneumatisch oder pneumatisch sowie elektromechanisch betätigbaren Radbremsen an der Vorderachse des Fahrzeugs und ausschließlich elektromechanisch betätigbaren Radbremsen an der Hinterachse des Fahrzeugs gemäß einem ersten Ausführungsbeispiel der Erfindung;

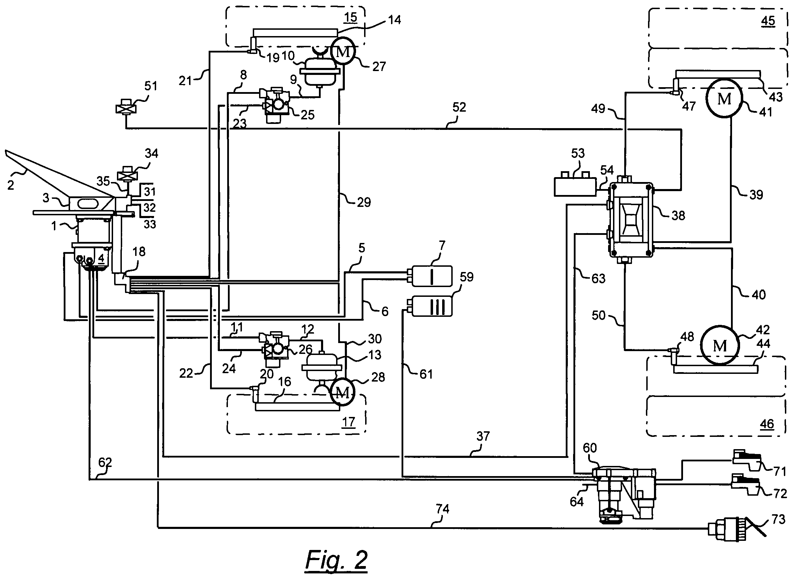

- Fig. 2: eine als Hybridsystem ausgebildete Bremsanlage zur Abbremsung eines Fahrzeugzugs, bestehend aus einem Zugfahrzeug und einem Anhängefahrzeug, in vereinfachter schematischer Darstellung mit elektropneumatisch oder pneumatisch sowie elektromechanisch betätigbaren Radbremsen an der Vorderachse des Zugfahrzeugs und ausschließlich elektromechanisch betätigbaren Radbremsen an der Hinterachse des Zugfahrzeugs gemäß einem zweiten Ausführungsbeispiel der Erfindung;

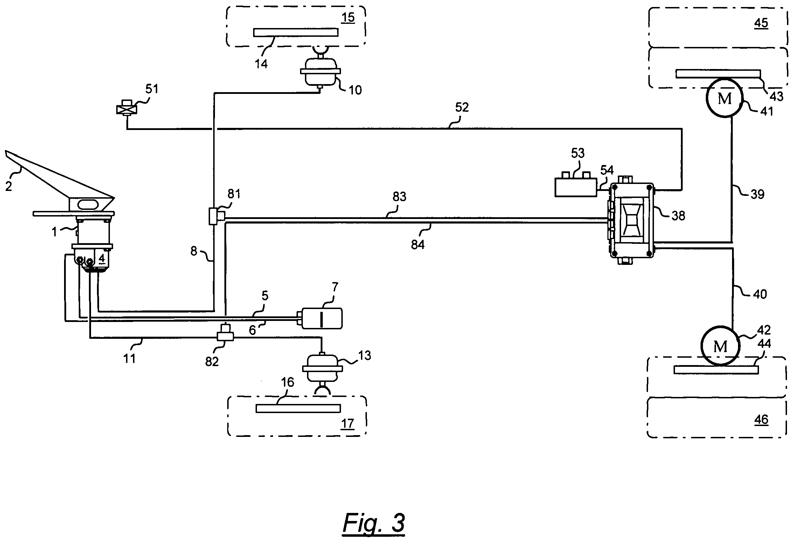

- Fig. 3: eine nicht erfindungsgemäße und rein beispielhafte als Hybridsystem ausgebildete Bremsanlage zur Abbremsung eines Fahrzeugs in vereinfachter schematischer Darstellung mit pneumatisch betätigbaren Radbremsen an der Vorderachse des Fahrzeugs und ausschließlich elektromechanisch betätigbaren Radbremsen an der Hinterachse des Fahrzeugs gemäß einem dritten Ausführungsbeispiel der Erfindung und

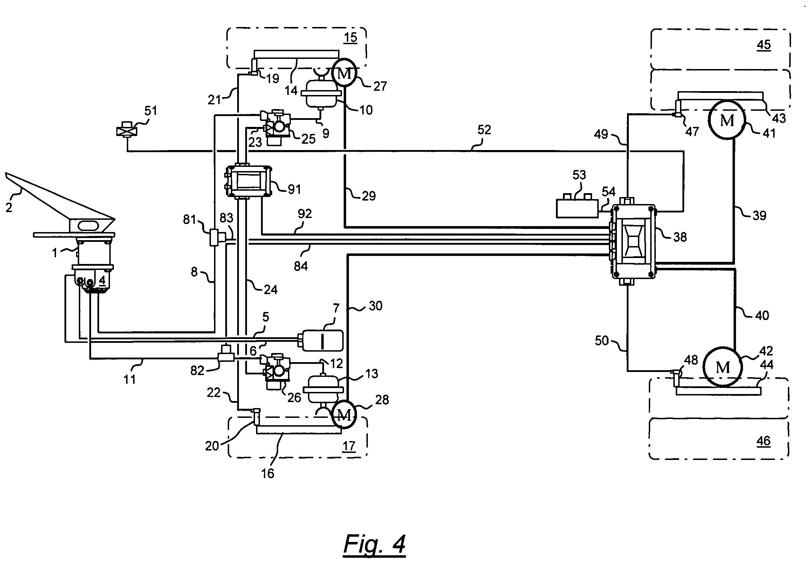

- Fig. 4: eine als Hybridsystem ausgebildete Bremsanlage zur Abbremsung eines Fahrzeugs in vereinfachter schematischer Darstellung mit pneumatisch und elektromechanisch betätigbaren Radbremsen an der Vorderachse des Fahrzeugs und ausschließlich elektromechanisch betätigbaren Radbremsen an der Hinterachse des Fahrzeugs gemäß einem vierten Ausführungsbeispiel der Erfindung.

Fig. 1 zeigt schematisch ein erstes Ausführungsbeispiel der erfindungsgemäßen Bremsanlage mit elektropneumatisch oder pneumatisch sowie elektromechanisch betätigbaren Radbremsen an der Vorderachse eines Fahrzeugs sowie ausschließlich elektromechanisch betätigbaren Radbremsen an der Hinterachse des Fahrzeugs. Dargestellt sind vorrangig die zum Verständnis der vorliegenden Erfindung wichtigen Komponenten der Bremsanlage.

Eine Bremspedaleinrichtung 1 ist mittels eines Bremspedals 2 betätigbar. In Erwiderung auf eine Betätigung ist von einem Bremswertgeber 3 unmittelbar ein Bremsanforderungssignal generierbar. Eine in diesem Ausführungsbeispiel in die Bremspedaleinrichtung 1 integrierte Ventileinheit 4 ist über Druckluftleitungen 5 und 6 mit einem Druckluftvorratsbehälter 7 verbunden.

In Erwiderung auf das Bremsanforderungssignal steuert die Bremsanlage mittelbar über die Ventileinheit 4 einen Druck aus. In einer Variante dieses Ausführungsbeispiels ist der Druck ausschließlich elektropneumatisch mittels dieser Ventileinheit 4 aussteuerbar; in einer anderen Variante ist der Druck ausschließlich pneumatisch mittels der Ventileinheit 4 aussteuerbar. Dann kann unter Umständen auf Druckluftleitungen im Führerhaus des Fahrzeugs verzichtet werden. Der ausgesteuerte Druck ist über Druckluftleitungen 8 und 9 einem Druckluftbremszylinder 10 und über Druckluftleitungen 11 und 12 einem weiteren Druckluftbremszylinder 13 bereitstellbar. Mittels des Druckluftbremszylinders 10 ist eine Radbremse 14 zur Abbremsung eines Vorderrads 15 betätigbar. Mittels des Druckluftbremszylinders 13 ist eine Radbremse 16 zur Abbremsung eines weiteren Vorderrads 17 betätigbar. In die Bremspedaleinrichtung 1 ist ein erstes Modul 18 integriert. Mittels dieses Moduls sind die Bremsdrücke für die Druckluftbremszylinder 10 und 13 steuerbar.

Ein Blockieren der Räder 15 und 17 ist mittels der Drehzahlsensoren 19 und 20 feststellbar. Signale der Drehzahlsensoren 19 und 20 sind nämlich über elektrische Leitungen 21 und 22 dem ersten Modul 18 bereitstellbar. Bei festgestelltem Blockieren eines Rades sind über elektrische Leitungen 23 und 24 Signale an ABS-Ventile 25 und 26 sendbar, über die die Druckluftleitungen 9 und 12 und damit die Druckluftbremszylinder 10 und 13 entlüftbar sind. Die Radbremsen 14 und 16 sind somit bei festgestelltem Blockieren eines Rades lösbar.

Die Radbremsen 14 und 16 sind zusätzlich für die Feststell- und Hilfsbremsfunktion über elektromechanische Bremsbetätigungseinrichtungen 27 und 28 betätigbar. Diese elektromechanischen Bremsbetätigungseinrichtungen 27 und 28 sind über elektrische Leitungen 29 und 30 mit dem ersten Modul 18 verbunden und sind von diesem steuerbar. Eine ABS-Funktion für die elektromechanischen Bremsbetätigungseinrichtungen 27 und 28 ist ebenfalls in das erste Modul 18 integriert.

Die Bremspedaleinrichtung 1 und/oder das erste Modul 18 ist über eine elektrische Leitung 31 von einer nicht dargestellten Batterie mit elektrischer Energie versorgbar. Ferner weist die Bremspedaleinrichtung 1 einen CAN-Bus 32 und eine elektrische Leitung 33 auf, über die die Bremspedaleinrichtung 1 mit einer nicht dargestellten Diagnoseeinrichtung verbindbar ist. Mittels der Diagnoseeinrichtung ist die Bremsanlage überwachbar. Mittels eines Tasters 34 oder einer beliebigen anderen Eingabeeinrichtung ist zudem ein Signal zum Einlegen einer Rollsperre erzeugbar und mittels einer elektrischen Leitung 35 an die Bremspedaleinrichtung 1 bzw. das dort integrierte erste Modul 18 sendbar.

Die Bremspedaleinrichtung 1 bzw. das erste Modul 18 ist über eine elektrische Leitung 37 mit einem zweiten Modul 38 verbunden. Über die elektrische Leitung 37 sind Signale austauschbar. Insbesondere ist dem zweiten Modul 38 über die elektrische Leitung 37 ein Bremsanforderungssignal vom Bremswertgeber 3 übermittelbar. Vom zweiten Modul 38 sind über elektrische Leitungen 39 und 40 elektromechanische Bremsbetätigungseinrichtungen 41 und 42 von Radbremsen 43 und 44 zur Abbremsung von Hinterrädern 45 und 46 steuerbar. Mittels des vom Bremswertgeber 3 erzeugten Bremsanforderungssignals sind folglich nicht nur die Radbremsen 14 und 16 an wenigstens einer ersten Achse des Fahrzeugs sondern über die elektromechanischen Bremsbetätigungseinrichtungen 41 und 42 auch die Radbremsen 43 und 44 an wenigstens einer zweiten Achse des Fahrzeugs steuerbar.

In das zweite Modul 38 ist zudem eine ABS-Funktion für die Radbremsen 43 und 44 integriert. Drehzahlen der Räder 45 und 46 sind mittels Drehzahlsensoren 47 und 48 erfassbar und über elektrische Leitungen 49 und 50 an das zweite Modul 38 übermittelbar. Bei festgestelltem Blockieren der Räder 45 und 46 sind von diesem zweiten Modul 38 über die elektrischen Leitungen 39 und 40 die elektromechanischen Bremsbetätigungseinrichtungen 41 und 42 und damit die Radbremsen 43 und 44 lösbar.

Über die elektromechanischen Bremsbetätigungseinrichtungen 41 und 42 wird darüber hinaus eine elektromechanische Feststellbremsfunktion zur Verfügung gestellt. Ein Anforderungssignal für die Feststellbremsfunktion einer Parkbremse ist mittels eines Tasters 51 generierbar und über eine elektrische Leitung 52 an das zweite Modul 38 sendbar. Anstelle des Tasters 51 kann auch eine beliebige andere Eingabeeinrichtung verwendet werden. Vom zweiten Modul 38 sind nach Eingang eines Signals vom Taster 51 die elektromechanischen Bremsbetätigungseinrichtungen 41 und 42 zum Einlegen einer Feststellbremse an den Hinterrädern 45 und 46 betätigbar.

Über die Datenleitung 37 kann vom zweiten Modul 38 die Park- bzw. Hilfsbremsfunktion der vorderen elektromechanischen Bremsbetätigungseinrichtung über das erste Modul 18 angefordert werden.

Die Bremsanlage weist ferner eine zweite Batterie 53 auf, mittels der über eine elektrische Leitung 54 das zweite Modul 38 mit elektrischer Energie versorgbar ist. Die Radbremsen 43 und 44 sind somit unabhängig von der Funktionsfähigkeit des ersten Moduls 18 und/oder der Batterie 34 betätigbar. Selbst die ABS-Funktion für die Radbremsen 43 und 44 der Hinterachse ist von der Funktion des ersten Moduls 18 unabhängig.

Alternative Ausführungsformen der Erfindung können von diesem speziellen Ausführungsbeispiel abweichen. Die Vorderräder 15 und 17 können ebenso wie die Räder 45 und 46 jeweils Räder einer beliebigen Achse eines Fahrzeugs sein. Insbesondere können die Räder 15 und 17 auch Hinterräder und die Räder 45 und 46 auch Vorderräder sein.

Das erste Modul 18 muss nicht in die Bremspedaleinrichtung 1 integriert sein. Es ist vielmehr auch eine aufgelöste Bauweise möglich. Ferner können die Module 18 und 38 auch von einer einzigen Batterie oder einer anderen gemeinsamen Energieversorgung mit elektrischer Energie versorgbar sein. Auch eine zusammengefasste Bauweise der Module 18 und 38 ist möglich. Ein derart zusammengefasstes Modul kann dann separat verbaut oder auch baulich in die Bremspedaleinrichtung integriert sein.

Die elektromechanischen Bremsbetätigungseinrichtungen 27 und 28 können entweder eine Hilfsbremsfunktion, oder dazu auch eine Feststellbremsfunktion zur Verfügung stellen. Über die Druckluftbremszylinder 10 und 13 ist eine Betriebsbremsfunktion realisiert.

Ggf. und insbesondere dann, wenn die Räder 15 und 17 Hinterräder sind, können die druckluftbetriebenen Bremszylinder 10 und 13 auch als kombinierte Federspeicher-/Membranbremszylinder ausgeführt sein. Dann stellen sie zusätzlich eine Feststellbremsfunktion zur Verfügung. Die Druckluftbremszylinder 10 und 13 weisen dann einen Membranteil auf, der pneumatisch mit dem Betriebsbremssystem verbunden ist, sowie einen Federspeicherteil auf, welcher über gesonderte Druckluftleitungen mit Druckluft beaufschlagbar ist.

Die elektromechanischen Bremsbetätigungseinrichtungen 41 und 42 stellen mindestens eine Betriebsbremsfunktion bereit. Darüber hinaus und insbesondere dann, wenn die Räder 45 und 46 Hinterräder sind, können die elektromechanischen Bremsbetätigungseinrichtungen 41 und 42 zusätzlich eine Feststellbremsfunktion bereitstellen. Eine Feststellbremsfunktion ist beispielsweise über eine der Betätigungsarten, d.h. entweder elektromechanisch oder elektropneumatisch/pneumatisch alleine oder in einer Kombination dieser Betätigungsarten realisiert.

In einer vom Ausführungsbeispiel gemäß Fig. 1 abweichenden Ausführung wird in Erwiderung auf eine Betätigung des Bremspedals 2 unmittelbar pneumatisch ein Druck ausgesteuert. Mit Hilfe dieses Druckes werden die pneumatisch betätigbaren Bremszylinder des Fahrzeugs betätigt. Das Bremsanforderungssignal zum Betätigen der elektromechanisch betätigbaren Radbremsen der zweiten Achse des Fahrzeugs wird in diesem von Fig. 1 abweichenden Ausführungsbeispiel aus Signalen nicht dargestellter Drucksensoren, welche sich in den Druckluftleitungen 8 und 11 befinden, generiert.

Fig. 2 zeigt schematisch ein zweites Ausführungsbeispiel der erfindungsgemäßen Bremsanlage für den Einsatz in einem Fahrzeugzug, bestehend aus einem Zugfahrzeug und einem Anhängefahrzeug, mit elektropneumatisch betätigbaren Radbremsen an der Vorderachse des Zugfahrzeugs sowie elektromechanisch betätigbaren Radbremsen sowohl an der Vorderachse als auch an der Hinterachse des Zugfahrzeugs. Dargestellt sind wiederum vorrangig die zum Verständnis der vorliegenden Erfindung wichtigen Komponenten der Bremsanlage.

Im Gegensatz zum Ausführungsbeispiel gemäß Fig. 1 weist das Ausführungsbeispiel gemäß Fig. 2 zusätzlich einen Druckluftvorratsbehälter 59 auf, welcher Druckluft für ein Anhängefahrzeug bereitstellt. Ein Anhängersteuerventil 60 ist über eine Druckluftleitung 61 mit dem Druckluftvorratsbehälter 59 verbunden. Ein in der Ventileinheit 4 ausgesteuerter Luftdruck gelangt über eine Druckluftleitung 62 an das Anhängersteuerventil 60. Das Anhängersteuerventil 60 weist darüber hinaus zwei Anschlüsse für elektrische Leitungen 63 und 64 auf. Über die elektrische Leitung 63 ist das Anhängersteuerventil mit dem zweiten Modul 38 elektrisch verbunden. Über diese elektrische Leitung 63 sind Steuersignale zwischen dem zweiten Modul 38 und dem Anhängersteuerventil 60 austauschbar.

Das Anhängersteuerventil 60 stellt den ausgesteuerten Luftdruck sowie die Vorratsdruckluft über die Druckluftanschlüsse 71 und 72 dem Anhängefahrzeug bereit. Ein angekoppeltes Anhängefahrzeug mit pneumatisch betätigbaren Radbremsen ist über die von diesen Druckluftanschlüssen 71 und 72 bereitgestellte Druckluft abbremsbar.

Zum Ankoppeln und Abbremsen eines Anhängefahrzeugs mit elektromechanisch betätigbaren Radbremsen weist das Ausführungsbeispiel gemäß Fig. 2 zudem einen elektrischen Steckanschluss 73 auf, welcher über eine elektrische Leitung 74 mit dem ersten Modul 18 verbunden ist. Ein Bremsanforderungssignal zum Betätigen von Radbremsen des Anhängefahrzeugs ist über diese elektrische Leitung 74 und den elektrischen Steckanschluss 73 dem Anhängefahrzeug bereitstellbar. Das Anhängefahrzeug kann, sofern es elektromechanisch betätigbare Radbremsen aufweist, in Erwiderung auf ein über den elektrischen Steckanschluss 73 bereitgestelltes elektrisches Signal über diese elektromechanischen Radbremsen abgebremst werden.

Fig. 3 zeigt schematisch eine nicht erfindungsgemäße Bremsanlage mit pneumatisch betätigbaren Radbremsen an der Vorderachse eines Fahrzeugs sowie ausschließlich elektromechanisch betätigbaren Radbremsen an der Hinterachse des Fahrzeugs. Dargestellt sind lediglich ausgewählte zum Verständnis der vorliegenden Erfindung wichtige Komponenten der Bremsanlage.

In der Bremspedaleinrichtung 1 wird in Erwiderung auf eine Betätigung des Bremspedals 2 unmittelbar pneumatisch mittels der Ventileinheit 4 ein pneumatischer Druck ausgesteuert. Druckmittel wird der Bremspedaleinrichtung 1 bzw. der darin befindlichen Ventileinheit 4 aus dem Druckluftvorratsbehälter 7 über die Druckluftleitungen 5 und 6 bereitgestellt. Mit dem mittels der Ventileinheit 4 ausgesteuerten pneumatischen Druck werden über die Druckluftleitungen 8 und 11 die Druckluftbremszylinder 10 und 13 betätigt. Diese Druckluftbremszylinder 10 und 13 betätigen die Radbremsen 14 und 16 zum Abbremsen der Vorderräder 15 und 17 des Fahrzeugs mit der erfindungsgemäßen Bremsanlage.

Das elektrische Bremsanforderungssignal ist in diesem Ausführungsbeispiel mittelbar erzeugbar. In den Druckluftleitungen 8 und 11 ist nämlich mittels Drucksensoren 81 und 82 der von der Ventileinheit 4 ausgesteuerte pneumatische Druck messbar. In Erwiderung auf die Druckmessung mittels dieser Drucksensoren 81 und 82 senden diese Drucksensoren elektrische Signale über elektrische Leitungen 83 und 84 an das zweite Modul 38. Diese elektrischen Signale sind die Bremsanforderungssignale oder es sind Signale, aus denen ein oder mehrere Bremsanforderungssignale vom zweiten Modul 38 generierbar sind.

Dieses zweite Modul 38 ist von einer Batterie 53 über eine elektrische Leitung 54 mit elektrischer Energie versorgbar. Die Energieversorgung ist somit unabhängig von einer Energieversorgung für andere elektrische Systeme des Fahrzeugs. Ferner ist das zweite Modul 38 über die elektrische Leitung 52 mit dem Taster für die Parkbremse 51 verbunden.

Das zweite Modul 38 steuert über die elektrischen Leitungen 39 und 40 die elektromechanischen Bremsbetätigungseinrichtungen 41 und 42 zum Betätigen der Radbremsen 43 und 44 und damit zum Abbremsen bzw. zum Feststellen der Hinterräder 45 und 46 des Fahrzeugs.

Zum Betätigen der Betriebsbremse in Erwiderung auf eine Betätigung des Bremspedals 2 werden somit die Radbremsen 14 und 16 direkt über den unmittelbar pneumatisch erzeugten Druck über die Druckluftbremszylinder 10 und 13 betätigt. Die Radbremsen 43 und 44 werden dagegen mittelbar, nämlich erst in Erwiderung auf eine Messung des pneumatischen Drucks in den Druckluftleitungen 8 und 11 betätigt.

Fig. 4 zeigt schematisch ein viertes Ausführungsbeispiel der erfindungsgemäßen Bremsanlage mit pneumatisch und elektromechanisch betätigbaren Radbremsen an der Vorderachse eines Fahrzeugs sowie ausschließlich elektromechanisch betätigbaren Radbremsen an der Hinterachse des Fahrzeugs. Dargestellt sind vor allem die zum Verständnis der vorliegenden Erfindung wichtigen Komponenten der Bremsanlage.

Dieses Ausführungsbeispiel gemäß Fig. 4 ist eine Erweiterung des Ausführungsbeispiels gemäß Fig. 3. Es werden lediglich die zum Verständnis wichtigen Merkmale der Bremsanlage beschrieben.

In Abweichung zum Ausführungsbeispiel gemäß Fig. 3 sind die Radbremsen 14 und 16 zum Abbremsen der Vorderräder 15 und 17 nicht nur mittels der Druckluftbremszylinder 10 und 13, sondern auch mittels der elektromechanischen Bremsbetätigungseinrichtungen 27 und 28 betätigbar. Die Ansteuerung dieser elektromechanischen Bremsbetätigungseinrichtungen 27 und 28 erfolgt über die elektrischen Leitungen 29 und 30, welche in Abweichung zu den Ausführungsbeispielen 1 und 2 nicht mit einem ersten Modul sondern mit dem zweiten Modul 38 verbunden sind. Die elektromechanischen Bremsbetätigungseinrichtung 27, 28, 41 und 42 zum Abbremsen der Vorderräder 15 und 17 sowie der Hinterräder 45 und 46 sind somit alle vom zweiten Modul 38 steuerbar.

Die elektromechanischen Bremsbetätigungseinrichtungen 27 und 28 können dabei die Betriebsbremsfunktion der pneumatisch betätigbaren Druckluftbremszylinder 10 und 13 unterstützen, alternativ zu diesen pneumatisch betätigbaren Druckluftbremszylindern eingesetzt werden und dazu eine Feststellbremsfunktion aufweisen.

In Abweichung zum Ausführungsbeispiel gemäß Fig. 3 zeigt das Ausführungsbeispiel gemäß Fig. 4 zudem ein Antiblockiersystem. Zum Feststellen eines Blockierens der Vorderräder 15 und 17 und der Hinterräder 45 und 46 weist die Bremsanlage daher die Drehzahlsensoren 19, 20, 47 und 48 auf. Die Drehzahlsensoren 47 und 48 sind über die elektrischen Leitungen 49 und 50 mit dem zweiten Modul 38 verbunden. Das Blockieren des Hinterrades 45 bzw. 46 ist somit vom zweiten Modul 38 erkennbar. Über die elektrische Leitung 39 bzw. 40 ist daraufhin die Radbremse 43 bzw. 44 des blockierenden Hinterrades 45 bzw. 46 lösbar.

Auch die Radbremse 14 bzw. 16 ist bei einem Blockieren des Vorderrades 15 bzw. 17 lösbar. Hierzu werden die Drehzahlinformationen der Drehzahlsensoren 19 und 20 über die elektrischen Leitungen 21 und 22 an ein ABS (Antiblockiersystem) -Modul 91 übermittelt. Ein Austausch von Daten, insbesondere von Drehzahlinformationen und/oder ein erkanntes Blockieren eines Rades, zwischen dem ABS-Modul 91 und dem zweiten Modul 38 ist über eine elektrische Leitung 92 möglich. Somit ist auch die mittels der elektromechanischen Bremsbetätigungseinrichtung 27 bzw. 28 betätigte Radbremse 14 bzw. 16 bei festgestelltem Blockieren des Vorderrades 15 bzw. 17 mittels des Drehzahlsensors 19 bzw. 20 vom zweiten Modul 38 über die elektrischen Leitungen 29 bzw. 30 vornehmbar.

Zum Lösen der mittels des Druckluftzylinders 10 bzw. 13 eingelegten Radbremse 14 bzw. 16 bei einem Blockieren des Rades 15 bzw. 17 weist die Erfindung das ABS-Modul 25 bzw. 26 auf. Die Druckluftleitungen 8 und 11 verbinden somit nicht direkt die Ventileinheit 4 mit den Druckluftbremszylindern 10 und 13. Die Ventileinheit 4 ist vielmehr über die Druckluftleitungen 8 und 9 sowie das ABS-Modul 25 mit dem Druckluftbremszylinder 10 sowie über die Druckluftleitungen 11 und 12 und das ABS-Ventil 26 mit dem Druckluftbremszylinder 13 verbunden. Die Druckluftleitung 9 bzw. 12 ist somit mittels des ABS-Ventils 25 bzw. 26 entlüftbar. Dieses Entlüften wird bei festgestelltem Blockieren des Vorderrades 15 bzw. 17 vorgenommen. Hierzu sind die ABS-Ventile 25 und 26 über die elektrischen Leitungen 23 und 24 vom ABS-Modul 91 steuerbar.

In Abweichung zu diesem Ausführungsbeispiel gemäß Fig. 4 kann das ABS-Modul 91 auch entfallen. Dann ist die Funktionalität des ABS-Moduls 91 in das zweite Modul 38 integriert. Alternativ zum zweiten Modul 38 kann auch das erste Modul 18 verbaut sein, welches vorzugsweise in die Bremspedaleinrichtung 1 integriert ist.

Insgesamt ermöglicht die Erfindung eine Bremsanlage, die mit nur wenigen teuren druckluftbetriebenen Bremszylindern auskommt. Auch die Anzahl von Druckmittelleitungen, Ventilen und ABS-Ventilen ist gegenüber herkömmlichen Bremsanlagen reduziert. Stattdessen verwendet die Erfindung elektromechanisch betätigbare Radbremsen, realisiert eine Feststellbremsfunktion sowie eine ABS-Funktion elektromechanisch und verwendet dabei elektromechanische Komponenten, die günstiger sind als pneumatische Komponenten.

Der gemeinsame Einsatz druckluftbetätigbarer Radbremsen und elektromechanisch betätigbarer Radbremsen als Betriebsbremsen zum Abbremsen eines Fahrzeugs verringert zudem die Gefahr eines gleichzeitigen Versagens aller Betriebsbremsen eines Fahrzeugs.

Alle in der vorstehenden Beschreibung und in den Ansprüchen genannten Merkmale sind auch einzeln mit der erfindungsgemäßen Bremsanlage kombinierbar. Somit ist die Erfindung nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Bremsanlage für ein Fahrzeug, insbesondere ein Nutzfahrzeug, mit druckluftbetriebenen Bremszylindern (10, 13) zum Betätigen von Radbremsen (14, 16) mittels Druckluft an wenigstens einer ersten Achse des Fahrzeugs und mit Radbremsen (43, 44) an wenigstens einer zweiten Achse des Fahrzeugs, welche in Erwiderung auf ein elektrisches Bremsanforderungssignal ausschließlich elektromechanisch betätigbar sind, wobei in Erwiderung auf eine Betätigung eines Bremspedals (2) einer Bremspedaleinrichtung (1) mittelbar oder unmittelbar der pneumatische Druck der Druckluft aussteuerbar und mittelbar oder unmittelbar das elektrische Bremsanforderungssignal erzeugbar ist und wobei eine Betriebsbremsfunktion mittels eines hybriden Einsatzes der Radbremsen (14, 16) an der wenigstens einen ersten Achse des Fahrzeugs zusammen mit den Radbremsen (43, 44) an der wenigstens einen zweiten Achse des Fahrzeugs bereitstellbar ist, **gekennzeichnet durch** eine erste Betätigungsart, in der die Radbremsen (14, 16) an der wenigstens einen ersten Achse des Fahrzeugs mittels der druckluftbetriebenen Bremszylinder (10, 13) betätigbar sind, und durch eine zweite Betätigungsart, in der die Radbremsen (14, 16) an dieser wenigstens einen ersten Achse des Fahrzeugs elektromechanisch betätigbar sind, und **dadurch, dass** die Betriebsbremsfunktion an dieser wenigstens einen ersten Achse des Fahrzeugs entweder durch eine dieser zwei Betätigungsarten alleine oder durch diese beiden Betätigungsarten zusammen ausführbar ist.

2. Bremsanlage nach Anspruch 1, **dadurch gekennzeichnet, dass** die Radbremsen (14, 16) an der wenigstens einen ersten Achse des Fahrzeugs über eine elektromechanisch betätigbare Feststellbremsfunktion verfügen, über die das Fahrzeug im abgestellten Zustand alleine oder unterstützend feststellbar ist.

3. Bremsanlage nach einem der vorhergehenden Ansprüche, **dadurch gekennzeichnet, dass** die Radbremsen (14, 16) an der wenigstens einen ersten Achse des Fahrzeugs über eine pneumatisch betätigbare Feststellbremsfunktion verfügen, über die das Fahrzeug im abgestellten Zustand alleine oder unterstützend feststellbar ist.

4. Bremsanlage nach einem der vorhergehenden Ansprüche, **dadurch gekennzeichnet, dass** die Radbremsen (43, 44) an der wenigstens einen zweiten Achse des Fahrzeugs über eine elektromechanisch betätigbare Feststellbremsfunktion verfügen, über die das Fahrzeug im abgestellten Zustand alleine oder unterstützend feststellbar ist.

5. Bremsanlage nach einem der vorhergehenden Ansprüche, **gekennzeichnet durch** einen Bremswertgeber (3) in der Bremspedaleinrichtung (1), durch welchen in Erwiderung auf eine Betätigung des Bremspedals (2) das Bremsanforderungssignal erzeugbar ist, wobei der pneumatische Druck in Erwiderung auf das Bremsanforderungssignal elektropneumatisch und zum Erhöhen der Betriebssicherheit bei einem Ausfall elektrischer Systeme auch in direkter Erwiderung auf eine Betätigung des Bremspedals (2) pneumatisch aussteuerbar ist.

6. Bremsanlage nach einem der Ansprüche 1 bis 4, **gekennzeichnet durch** einen Bremswertgeber (3) in der Bremspedaleinrichtung (1), durch welchen in Erwiderung auf eine Betätigung des Bremspedals (2) das Bremsanforderungssignal erzeugbar ist, wobei der pneumatische Druck ausschließlich in Erwiderung auf das Bremsanforderungssignal elektropneumatisch aussteuerbar ist.

7. Bremsanlage nach einem der Ansprüche 1 bis 4, **gekennzeichnet durch** einen Bremswertgeber (3) in der Bremspedaleinrichtung (1), durch welchen in Erwiderung auf eine Betätigung des Bremspedals (2) das Bremsanforderungssignal erzeugbar ist, wobei der pneumatische Druck ausschließlich in direkter Erwiderung auf die Betätigung des Bremspedals (2) pneumatisch aussteuerbar ist.

8. Bremsanlage nach einem der Ansprüche 1 bis 4, **dadurch gekennzeichnet, dass** der pneumatische Druck in ausschließlich direkter Erwiderung auf eine Betätigung des Bremspedals (2) pneumatisch aussteuerbar ist, wobei die Bremsanlage einen oder mehrere Drucksensoren aufweist und wobei mittels des bzw. eines Drucksensors der ausgesteuerte Druck messbar und das bzw. ein Bremsanforderungssignal erzeugbar ist.

9. Bremsanlage nach einem der vorhergehenden Ansprüche, **dadurch gekennzeichnet, dass** die Bremsanlage ein Modul (18; 38) aufweist, wobei die elektromechanisch betätigbaren Radbremsen (43, 44) an der wenigstens einen zweiten Achse des Fahrzeugs und ggf. die elektromechanisch betätigbaren Radbremsen (14, 16) an der wenigstens einen ersten Achse des Fahrzeugs von diesem Modul (18; 38) steuerbar sind.

10. Bremsanlage nach einem der Ansprüche 1 bis 8, **dadurch gekennzeichnet, dass** die Bremsanlage ein erstes Modul (18) und ein zweites Modul (38) aufweist, wobei die Radbremsen (14, 16) an der wenigstens einen ersten Achse des Fahrzeugs vom ersten Modul (18) steuerbar sind und wobei die Radbremsen (43, 44) an der wenigstens einen zweiten Achse des Fahrzeugs vom zweiten Modul (38) steuerbar sind.

11. Bremsanlage nach Anspruch 10, **dadurch gekennzeichnet, dass** das erste Modul (18) von einer ersten Batterie und das zweite Modul (38) von einer zweiten Batterie (53) mit elektrischer Energie versorgbar ist.

12. Bremsanlage nach einem der Ansprüche 9, 10 oder 11, **dadurch gekennzeichnet, dass** das erste Modul (18) baulich in die Bremspedaleinrichtung (1) integriert ist.

13. Bremsanlage nach einem der vorhergehenden Ansprüche, **dadurch gekennzeichnet, dass** elektromechanisch betätigbare Radbremsen (43, 44, 14, 16) über eine elektromechanische ABS-Funktion verfügen, mittels der eine Radbremse eines blockierenden Rades automatisch lösbar ist, wobei die Bremsanlage wenigstens einen Drehzahlsensor (19, 20, 47, 48) aufweist, mittels dessen das Blockieren des blockierenden Rades feststellbar ist.

14. Bremsanlage nach Anspruch 13, **dadurch gekennzeichnet, dass** die ABS-Funktion einer Radbremse (14, 16, 43, 44) vom jeweils selben Modul (18, 38) steuerbar ist wie die jeweilige Radbremse (14, 16, 43, 44).

15. Bremsanlage nach einem der vorhergehenden Ansprüche, **dadurch gekennzeichnet, dass** wenigstens eine erste Achse des Fahrzeugs eine Vorderachse des Fahrzeugs ist und dass wenigstens eine zweite Achse des Fahrzeugs eine Hinterachse des Fahrzeugs ist.

16. Bremsanlage nach Anspruch 15, **dadurch gekennzeichnet, dass** wenigstens eine ggf. vorhandene weitere erste Achse des Fahrzeugs eine Hinterachse des Fahrzeugs ist und dass wenigstens eine ggf. vorhandene weitere zweite Achse des Fahrzeugs eine Vorderachse des Fahrzeugs ist.

17. Bremsanlage nach einem der Ansprüche 1 bis 14, **dadurch gekennzeichnet, dass** wenigstens eine erste Achse des Fahrzeugs eine Hinterachse des Fahrzeugs ist und dass wenigstens eine zweite Achse des Fahrzeugs eine Vorderachse des Fahrzeugs ist.

18. Bremsanlage nach Anspruch 17, **dadurch gekennzeichnet, dass** wenigstens eine ggf. vorhandene weitere erste Achse des Fahrzeugs eine Vorderachse des Fahrzeugs ist und dass wenigstens eine ggf. vorhandene weitere zweite Achse des Fahrzeugs eine Hinterachse des Fahrzeugs ist.

19. Bremsanlage nach einem der vorhergehenden Ansprüche, **dadurch gekennzeichnet, dass** an das Fahrzeug ein Anhängefahrzeug ankoppelbar ist, dass von der Bremsanlage ein pneumatischer Druck zum Betätigen von Radbremsen des Anhängefahrzeugs aussteuerbar ist und dass die Bremsanlage zwei Druckluftanschlüsse (71, 72) aufweist, wobei einem ggf. an das Fahrzeug angekoppelten Anhängefahrzeug über den Druckluftanschluss (71) Druckluft aus einem Druckluftvorratsbehälter (59) und über den Druckluftanschluss (72) Druckluft mit dem ausgesteuerten pneumatischen Druck zum Betätigen der Radbremsen des Anhängefahrzeugs bereitstellbar ist.

20. Bremsanlage nach einem der vorhergehenden Ansprüche, **dadurch gekennzeichnet, dass** an das Fahrzeug ein Anhängefahrzeug ankoppelbar ist, dass von der Bremsanlage ein elektrisches Signal zum Betätigen elektromechanisch betätigbarer Radbremsen des Anhängefahrzeugs erzeugbar ist und dass die Bremsanlage einen elektrischen Steckanschluss (73) aufweist, wobei über den elektrischen Steckanschluss (73) einem ggf. an das Fahrzeug angekoppelten Anhängefahrzeug das elektrische Signal zum Betätigen der elektromechanisch betätigbaren Radbremsen des Anhängefahrzeugs bereitstellbar ist.

## Claims

1. Braking system for a vehicle, in particular a commercial vehicle, comprising compressed-air-operated brake cylinders (10, 13) for actuating wheel brakes (14, 16) by means of compressed air on at least one first axle of the vehicle and comprising wheel brakes (43, 44) on at least one second axle of the vehicle, which in response to an electrical braking request signal can be actuated exclusively electromechanically, wherein in response to actuation of a brake pedal (2) of a brake pedal device (1) the pneumatic pressure of the compressed air can be indirectly or directly modulated and the electrical braking request signal can be indirectly or directly generated and wherein a service brake function can be provided by means of hybrid use of the wheel brakes (14, 16) on the at least one first axle of the vehicle together with the wheel brakes (43, 44) on the at least one second axle of the vehicle, **characterized by** a first actuating mode, in which the wheel brakes (14, 16) on the at least one first axle of the vehicle can be actuated by means of the compressed-air-operated brake cylinders (10, 13), and by a second actuating mode, in which the wheel brakes (14, 16) on this at least one first axle of the vehicle can be actuated electromechanically, and in that the service brake function on this at least one first axle of the vehicle can be performed either by one of these two actuating modes alone or by both of these actuating modes together.

2. Braking system according to Claim 1, **characterized in that** the wheel brakes (14, 16) on the at least one first axle of the vehicle have an electromechanically actuable parking brake function, by which the vehicle can be kept in the parked state by this means alone or with assistance.

3. Braking system according to one of the preceding claims, **characterized in that** the wheel brakes (14, 16) on the at least one first axle of the vehicle have a pneumatically actuable parking brake function, by which the vehicle can be kept in the parked state by this means alone or with assistance.

4. Braking system according to one of the preceding claims, **characterized in that** the wheel brakes (43, 44) on the at least one second axle of the vehicle have an electromechanically actuable parking brake function, by which the vehicle can be kept in the parked state by this means alone or with assistance.

5. Braking system according to one of the preceding claims, **characterized by** a braking-value sensor (3) in the brake pedal device (1), by which the braking request signal can be generated in response to an actuation of the brake pedal (2), wherein the pneumatic pressure can be modulated electropneumatically in response to the braking request signal and, to increase operational safety in the event of failure of electrical systems, also can be modulated pneumatically in direct response to an actuation of the brake pedal (2).

6. Braking system according to one of Claims 1 to 4, **characterized by** a brake-value sensor (3) in the brake pedal device (1), by which the braking request signal can be generated in response to an actuation of the brake pedal (2), wherein the pneumatic pressure can be modulated electropneumatically exclusively in response to the braking request signal.

7. Braking system according to one of Claims 1 to 4, **characterized by** a brake value sensor (3) in the brake pedal device (1), by which the braking request signal can be generated in response to an actuation of the brake pedal (2), wherein the pneumatic pressure can be modulated pneumatically exclusively in direct response to the actuation of the brake pedal (2).

8. Braking system according to one of Claims 1 to 4, **characterized in that** the pneumatic pressure can be modulated pneumatically in exclusively direct response to an actuation of the brake pedal (2), wherein the braking system has one or more pressure sensors and wherein by means of the or a pressure sensor the modulated pressure can be measured and the or a braking request signal can be generated.

9. Braking system according to one of the preceding claims, **characterized in that** the braking system has a module (18; 38), wherein the electromechanically actuable wheel brakes (43, 44) on the at least one second axle of the vehicle and optionally the electromechanically actuable wheel brakes (14, 16) on the at least one first axle of the vehicle can be controlled by this module (18; 38) .

10. Braking system according to one of Claims 1 to 8, **characterized in that** the braking system has a first module (18) and a second module (38), wherein the wheel brakes (14, 16) on the at least one first axle of the vehicle can be controlled by the first module (18) and wherein the wheel brakes (43, 44) on the at least one second axle of the vehicle can be controlled by the second module (38).

11. Braking system according to Claim 10, **characterized in that** the first module (18) can be supplied with electrical energy by a first battery and the second module (38) can be supplied with electrical energy by a second battery (53).

12. Braking system according to one of Claims 9, 10 or 11, **characterized in that** the first module (18) is structurally integrated in the brake pedal device (1) .

13. Braking system according to one of the preceding claims, **characterized in that** electromechanically actuable wheel brakes (43, 44, 14, 16) have an electromechanical ABS function, by means of which a wheel brake of a locking wheel is automatically releasable, wherein the braking system has at least one speed sensor (19, 20, 47, 48), by means of which the locking of the locking wheel can be detected.

14. Braking system according to Claim 13, **characterized in that** the ABS function of a wheel brake (14, 16, 43, 44) can be controlled by the same module (18, 38) in each case as the respective wheel brake (14, 16, 43, 44).

15. Braking system according to one of the preceding claims, **characterized in that** at least one first axle of the vehicle is a front axle of the vehicle and **in that** at least one second axle of the vehicle is a rear axle of the vehicle.

16. Braking system according to Claim 15, **characterized in that** at least one optionally present further first axle of the vehicle is a rear axle of the vehicle and **in that** at least one optionally present further second axle of the vehicle is a front axle of the vehicle.

17. Braking system according to one of Claims 1 to 14, **characterized in that** at least one first axle of the vehicle is a rear axle of the vehicle and **in that** at least one second axle of the vehicle is a front axle of the vehicle.

18. Braking system according to Claim 17, **characterized in that** at least one optionally present further first axle of the vehicle is a front axle of the vehicle and **in that** at least one optionally present further second axle of the vehicle is a rear axle of the vehicle.

19. Braking system according to one of the preceding claims, **characterized in that** a trailer vehicle can be coupled to the vehicle, **in that** a pneumatic pressure for actuating wheel brakes of the trailer vehicle can be modulated by the braking system and **in that** the braking system has two compressed-air connections (71, 72), wherein compressed air from a compressed air reservoir (59) can be provided via the compressed air connection (71) to a trailer vehicle optionally coupled to the vehicle and compressed air at the modulated pneumatic pressure can be provided via the compressed air connection (72) for actuating the wheel brakes of the trailer vehicle.

20. Braking system according to one of the preceding claims, **characterized in that** a trailer vehicle can be coupled to the vehicle, **in that** an electrical signal for actuating electromechanically actuable wheel brakes of the trailer vehicle can be generated by the braking system and **in that** the braking system has an electrical plug-in connection (73), wherein the electrical signal for actuating the electromechanically actuable wheel brakes of the trailer vehicle can be provided via the electrical plug-in connection (73) to a trailer vehicle optionally coupled to the vehicle.

## Revendications

1. Système de freinage pour un véhicule, en particulier pour un véhicule utilitaire, comprenant des cylindres de frein (10, 13) commandés par air comprimé pour actionner des freins de roue (14, 16) par air comprimé au niveau d'au moins un premier essieu du véhicule et des freins de roue (43, 44) au niveau d'au moins un deuxième essieu du véhicule, lesquels peuvent être actionnés de manière exclusivement électromécanique en réponse à un signal électrique de demande de freinage et, en réponse à un actionnement d'une pédale de frein (2) d'un dispositif de pédale de frein (1), la pression pneumatique de l'air comprimé pouvant être commandée directement ou indirectement et le signal électrique de demande de freinage pouvant être généré directement ou indirectement, et une fonction de frein de service pouvant être produite grâce à une utilisation hybride des freins de roue (14, 16) au niveau dudit au moins un premier essieu du véhicule conjointement avec les freins de roue (43, 44) au niveau dudit au moins deuxième essieu du véhicule, **caractérisé par** un premier mode d'actionnement dans lequel les freins de roue (14, 16) au niveau dudit au moins un premier essieu du véhicule peuvent être actionnés au moyen des cylindres de frein (10, 13) commandés par air comprimé, et par un deuxième mode d'actionnement dans lequel les freins de roue (14, 16) au niveau de cet au moins un premier essieu du véhicule peuvent être actionnés de manière électromécanique, et en ce que la fonction de frein de service au niveau de cet au moins un premier essieu du véhicule peut être réalisée soit par l'un de ces deux modes d'actionnement à lui seul soit par ces deux modes d'actionnement conjointement.

2. Système de freinage selon la revendication 1, **caractérisé en ce que** les freins de roue (14, 16) au niveau dudit au moins un premier essieu du véhicule possèdent une fonction de frein de stationnement pouvant être actionnée de manière électromécanique, le véhicule à l'état stationné pouvant être immobilisé par le biais de cette fonction à elle seule ou avec assistance.

3. Système de freinage selon l'une des revendications précédentes, **caractérisé en ce que** les freins de roue (14, 16) au niveau dudit au moins un premier essieu du véhicule possèdent une fonction de frein de stationnement pouvant être actionnée de manière pneumatique, le véhicule à l'état stationné pouvant être immobilisé par le biais de cette fonction à elle seule ou avec assistance.

4. Système de freinage selon l'une des revendications précédentes, **caractérisé en ce que** les freins de roue (43, 44) au niveau dudit au moins un deuxième essieu du véhicule possèdent une fonction de frein de stationnement pouvant être actionnée de manière électromécanique, le véhicule à l'état stationné pouvant être immobilisé par le biais de cette fonction à elle seule ou avec assistance.

5. Système de freinage selon l'une des revendications précédentes, **caractérisé par** un transmetteur de valeur de freinage (3) dans le dispositif de pédale de frein (1), transmetteur par lequel le signal de demande de freinage peut être généré en réponse à un actionnement de la pédale de frein (2), la pression pneumatique pouvant être commandée de manière électropneumatique en réponse au signal de demande de freinage et de manière pneumatique également en réponse directe à un actionnement de la pédale de frein (2) pour augmenter la sécurité de fonctionnement en cas de défaillance de systèmes électriques.

6. Système de freinage selon l'une des revendications 1 à 4, **caractérisé par** un transmetteur de valeur de freinage (3) dans le dispositif de pédale de frein (1), transmetteur par lequel le signal de demande de freinage peut être généré en réponse à un actionnement de la pédale de frein (2), la pression pneumatique pouvant être commandée de manière électropneumatique exclusivement en réponse au signal de demande de freinage.

7. Système de freinage selon l'une des revendications 1 à 4, **caractérisé par** un transmetteur de valeur de freinage (3) dans le dispositif de pédale de frein (1), transmetteur par lequel le signal de demande de freinage peut être généré en réponse à un actionnement de la pédale de frein (2), la pression pneumatique pouvant être commandée de manière pneumatique exclusivement en réponse directe à l'actionnement de la pédale de frein (2) .

8. Système de freinage selon l'une des revendications 1 à 4, **caractérisé en ce que** la pression pneumatique peut être commandée de manière pneumatique en réponse exclusivement directe à un actionnement de la pédale de frein (2), le système de freinage comprenant un ou plusieurs capteurs de pression et, au moyen du ou d'un capteur de pression, la pression commandée pouvant être mesurée et le ou un signal de demande de freinage pouvant être généré.

9. Système de freinage selon l'une des revendications précédentes, **caractérisé en ce que** le système de freinage comprend un module (18 ; 38), les freins de roue (43, 44) pouvant être actionnés de manière électromécanique au niveau dudit au moins un deuxième essieu du véhicule et éventuellement les freins de roue (14, 16) pouvant être actionnés de manière électromécanique au niveau dudit au moins un premier essieu du véhicule pouvant être commandés par ce module (18 ; 38).

10. Système de freinage selon l'une des revendications 1 à 8, **caractérisé en ce que** le système de freinage comprend un premier module (18) et un deuxième module (38), les freins de roue (14, 16) au niveau dudit au moins un premier essieu du véhicule pouvant être commandés par le premier module (18), et les freins de roue (43, 44) au niveau dudit au moins un deuxième essieu du véhicule pouvant être commandés par le deuxième module (38).

11. Système de freinage selon la revendication 10, **caractérisé en ce que** le premier module (18) peut être alimenté en énergie électrique par une première batterie et le deuxième module (38) peut être alimenté en énergie électrique par une deuxième batterie (53).

12. Système de freinage selon l'une des revendications 9, 10 ou 11, **caractérisé en ce que** le premier module (18) est intégré structuralement dans le dispositif de pédale de frein (1).

13. Système de freinage selon l'une des revendications précédentes, **caractérisé en ce que** des freins de roue (43, 44, 14, 16) pouvant être actionnés de manière électromécanique possèdent une fonction ABS électromécanique grâce à laquelle un frein de roue d'une roue bloquante peut être desserré automatiquement, le système de freinage comprenant au moins un capteur de vitesse de rotation (19, 20, 47, 48) au moyen duquel le blocage de la roue bloquante peut être détecté.

14. Système de freinage selon la revendication 13, **caractérisé en ce que** la fonction ABS d'un frein de roue (14, 16, 43, 44) peut être commandée par respectivement le même module (18, 38) que le frein de roue (14, 16, 43, 44) respectif.

15. Système de freinage selon l'une des revendications précédentes, **caractérisé en ce qu'**au moins un premier essieu du véhicule est un essieu avant du véhicule et **en ce qu'**au moins un deuxième essieu du véhicule est un essieu arrière du véhicule.

16. Système de freinage selon la revendication 15, **caractérisé en ce qu'**au moins un autre premier essieu, éventuellement présent, du véhicule est un essieu arrière du véhicule et **en ce qu'**au moins un autre deuxième essieu, éventuellement présent, du véhicule est un essieu avant du véhicule.

17. Système de freinage selon l'une des revendications 1 à 14, **caractérisé en ce qu'**au moins un premier essieu du véhicule est un essieu arrière du véhicule et **en ce qu'**au moins un deuxième essieu du véhicule est un essieu avant du véhicule.

18. Système de freinage selon la revendication 17, **caractérisé en ce qu'**au moins un autre premier essieu, éventuellement présent, du véhicule est un essieu avant du véhicule et **en ce qu'**au moins un autre deuxième essieu, éventuellement présent, du véhicule est un essieu arrière du véhicule.

19. Système de freinage selon l'une des revendications précédentes, **caractérisé en ce qu'**une remorque peut être accouplée au véhicule, **en ce qu'**une pression pneumatique pour actionner des freins de roue de la remorque peut être commandée par le système de freinage et **en ce que** le système de freinage comprend deux raccords d'air comprimé (71, 72), de l'air comprimé provenant d'un réservoir d'air comprimé (59) pouvant être fourni, par le biais du raccord d'air comprimé (71), à une remorque accouplée éventuellement au véhicule, et de l'air comprimé à la pression pneumatique commandée pour actionner les freins de roue de la remorque pouvant être fourni, par le biais du raccord d'air comprimé (72), à une remorque accouplée éventuellement au véhicule.

20. Système de freinage selon l'une des revendications précédentes, **caractérisé en ce qu'**une remorque peut être accouplée au véhicule, **en ce qu'**un signal électrique pour actionner des freins de roue, pouvant être actionnés de manière électromécanique, de la remorque peut être généré par le système de freinage, et **en ce que** le système de freinage comprend une connexion enfichable électrique (73), le signal électrique pour actionner les freins de roue, pouvant être actionnés de manière électromécanique, de la remorque pouvant être fourni, par le biais de la connexion enfichable électrique (73), à une remorque accouplée éventuellement au véhicule.
